# EUROPÄISCHE PATENTSCHRIFT

(11) **EP 4 524 512 B1**
(45) Veröffentlichungstag und Bekanntmachung des Hinweises auf die Patenterteilung: **31.12.2025**
(21) Anmeldenummer: 24181624.8
(22) Anmeldetag: 12.06.2024
(51) Int. Cl.: G01B 21/04

(54) **KALIBRIER-ARTEFAKT**
CALIBRATION ARTIFACT
ARTEFACT D'ÉTALONNAGE

(30) Priorität: 15.09.2023 DE 102023208961
(43) Veröffentlichungstag der Anmeldung: 19.03.2025
(73) Patentinhaber: Dr. Johannes Heidenhain GmbH, 83301 Traunreut (DE)
(72) Erfinder: KRAUS, Robert, 83308 Trostberg (DE); STEPPUTAT, Michael, 83278 Traunstein (DE); MEISSNER, Markus, 83236 Übersee (DE); SCHERER, Markus, 83278 Traunstein (DE)

(56) Entgegenhaltungen:
- EP-A1- 3 739 287
- EP-B1- 3 338 054
- KRUTH: "Thermal Error Analysis and Compensation of an LED-CMOS Camera 3D Measuring System", MEASUREMENT SCIENCE REVIEW, vol. 3, no. 3, 1 January 2003 (2003-01-01), pages 5, XP055001009, ISSN: 1335-8871

## Beschreibung

### GEBIET DER TECHNIK

Die vorliegende Erfindung betrifft ein Kalibrier-Artefakt zur Überprüfung der geometrischen Abweichungen einer Maschine mittels eines optischen Positionsmesssystems.

### STAND DER TECHNIK

Aus der WO 01/38828 A1 ist ein optisches Positionsmesssystem bekannt, das als räumliches 2D-Winkelmesssystem ausgebildet ist und zur Bestimmung von Positionsinformationen im dreidimensionalen Raum genutzt werden kann. Dieses umfasst einerseits eine Sendeeinheit, die z.B. an einem im Raum beweglichen Messobjekt angeordnet ist, dessen räumliche Position und Orientierung zu bestimmen ist; als Sendeeinheit können etwa eine oder mehrere geeignete Lichtquellen fungieren. Stationär gegenüber der beweglichen Sendeeinheit sind andererseits ein oder mehrere optische Empfangseinheiten vorgesehen, die im Wesentlichen jeweils ein Abtastgitter sowie einen optoelektronischen Detektor aufweisen. Alternativ hierzu kann auch vorgesehen sein, dass die Sendeeinheit stationär und die Empfangseinheit beweglich im Raum angeordnet ist; ebenso kann die Zahl der Sende- und Empfangseinheiten variieren. Mit Hilfe eines derartigen Systems kann über eine Multiangulation die Pose der Sendeeinheit im Raum gemessen werden, d.h. deren räumliche Position und Orientierung. Hierzu wird von der jeweiligen Empfangseinheit aus gesehen die Richtung der Sichtlinie zur Sendeeinheit über zwei Winkelmessungen bestimmt. Bei einer bekannten Relativposition zweier Empfangseinheiten lässt sich aus dem Schnittpunkt der bestimmten Sichtlinien die Pose der Sendeeinheit ermitteln. Hinsichtlich weiterer Einzelheiten dieses Messprinzips sei ausdrücklich auf die genannte Druckschrift verwiesen.

Mit einem derartigen optischen Positionsmesssystem ist es möglich, in einer Maschine eventuell vorliegende geometrische Abweichungen in einem Kalibrationsprozess zu überprüfen. Im Fall einer Werkzeugmaschine werden in einem solchen Kalibrationsprozess dabei Abweichungen von Ist-Positionen und -Orientierungen des Werkstücks zum Werkzeug gegenüber SollPositionen und -Orientierungen erfasst. Hierzu wird im Kalibrationsprozess mit dem Positionsmesssystem direkt die Pose zwischen mehreren Sendeeinheiten bzw. Lichtquellen in einer definierten räumlichen Anordnung auf einem Kalibrier-Artefakt und mindestens einer Empfangseinheit des Positionsmesssystems im ganzen Bearbeitungsraum der Werkzeugmaschine bestimmt. Die Lichtquellen sind hierzu an definierten Positionen auf dem Kalibrier-Artefakt auf dem Werkstücktisch in der Werkzeugmaschine angeordnet, die Empfangseinheit in der relativ demgegenüber bewegbaren Werkzeugaufnahme. Eine solche Kalibration ist nach der Maschinen-Montage sowie später im Betrieb immer wieder erforderlich, um zu überprüfen, ob die geforderte geometrische Positioniergenauigkeit im Bearbeitungsraum den Anforderungen genügt. Die dabei generierten Daten können dazu verwendet werden, um die geometrische Genauigkeit der Maschine zu verbessern. Hierzu werden aus den ermittelten Abweichungen Korrekturwerte für die Bewegungsachsen der Maschine ermittelt, in einer Kompensationstabelle abgelegt und im Betrieb zur exakten Relativ-Positionierung von Werkzeug und Werkstück genutzt. Um eine korrekte Posen-Messung zu gewährleisten, muss sichergestellt sein, dass die Relativanordnung der Mehrzahl von Lichtquellen während des Kalibrationsprozesses unverändert bleibt und sich möglichst nicht durch thermische und/oder mechanische Effekte verändert.

Aus der EP 2 786 839 A1 ist ein hierzu ähnliches Vorgehen zur Kalibration von Werkzeugmaschinen bekannt. Als optisches Positionsmesssystem fungiert hier ein Interferometer, mit dem Längenmessungen zwischen dem Interferometer-Kopf in der Werkzeugaufnahme und mehreren Retroreflektoren vorgenommen werden, die auf einer Trägerplatte auf dem Werkstücktisch der Werkzeugmaschine angeordnet sind. Als Kalibrier-Artefakt, das für den Kalibrationsprozess auf dem Werkstücktisch aufgespannt wird, dient bei dieser Lösung somit die Trägerplatte mit den vier Retroreflektoren, die in den Ecken der Trägerplatte angeordnet sind. Ein derartiges Kalibrier-Artefakt ist jedoch für das eingangs erläuterte Positionsmesssystem, über das zur Posenbestimmung mehrere 2D-Winkelmessungen erfolgen, nicht geeignet. Hinzu kommt, dass sich die Relativpositionen der vier Retroreflektoren während der Kalibration z.B. durch eine Erwärmung der Trägerplatte undefiniert verändern können und derart keine korrekte Ermittlung von Kalibrationsdaten der Werkzeugmaschine gewährleistet ist. Desweiteren setzt das vorgesehene Kalibrier-Artefakt eine bestimmte Geometrie der Werkzeugmaschine voraus und kann demnach nicht universell eingesetzt werden.

### ZUSAMMENFASSUNG DER ERFINDUNG

Der vorliegenden Erfindung liegt die Aufgabe zugrunde, ein Kalibrier-Artefakt anzugeben, das in einem Kalibrationsprozess zur Überprüfung der geometrischen Abweichungen einer Maschine eingesetzt werden kann. Im Kalibrationsprozess soll dabei mittels eines optischen Positionsmesssystems über mehrere Winkelmessungen zuverlässig die Pose zwischen dem Kalibrier-Artefakt und mindestens einer Empfangseinheit des Positionsmesssystems bestimmt werden, selbst wenn thermische und/oder mechanische Einflüsse auf das Kalibrier-Artefakt einwirken.

Diese Aufgabe wird erfindungsgemäß durch ein Kalibrier-Artefakt mit den Merkmalen des Anspruchs 1 gelöst.

Vorteilhafte Ausführungsformen des erfindungsgemäßen Kalibrier-Artefakts ergeben sich aus den Maßnahmen, die in den abhängigen Ansprüchen aufgeführt sind.

Das erfindungsgemäße Kalibrier-Artefakt dient zur Überprüfung der geometrischen Abweichungen einer Maschine mittels eines optischen Positionsmesssystems. Es umfasst einem Grundkörper, auf dem eine erste Gruppe mit mindestens einer selektiv aktivierbaren Lichtquelle angeordnet ist. Ferner weist es einen auf dem Grundkörper angeordneten Lichtquellenträger auf, auf dem eine zweite Gruppe mit mindestens zwei selektiv aktivierbaren Lichtquellen angeordnet ist, wobei der Lichtquellenträger aus einem thermisch invarianten Material besteht.

Vorzugsweise ist die erste Gruppe von Lichtquellen und der Lichtquellenträger auf der gleichen Seite des Grundkörpers angeordnet.

Es ist möglich, dass der Lichtquellenträger stabförmig ausgebildet ist und die Lichtquellen darauf mit festen Abständen entlang der Längserstreckungsrichtung des Lichtquellenträgers angeordnet sind.

Weiterhin kann vorgesehen sein, dass der Grundkörper als auch der Lichtquellenträger jeweils ein oder mehrere plane Antastflächen aufweisen.

Vorzugsweise ist der Lichtquellenträger derart in einer Ausnehmung des Grundkörpers angeordnet, dass sich der Lichtquellenträger als auch der Grundkörper bei Temperaturänderungen weitgehend unabhängig voneinander ausdehnen oder kontrahieren können.

Dabei ist vorgesehen, dass die Ausnehmung im Grundkörper derart dimensioniert ist, dass die Antastflächen des Lichtquellenträgers zugänglich sind.

Hierbei kann der Lichtquellenträger über ein Festlager und mindestens ein Loslager in der Ausnehmung des Grundkörpers angeordnet werden.

Alternativ kann vorgesehen sein, dass
- der Lichtquellenträger über ein stegförmiges Verbindungselement in der Ausnehmung des Grundkörpers angeordnet ist, und
- wobei die Kontaktflächen zwischen dem Verbindungselement und dem Lichtquellenträger und der Ausnehmung im Grundkörper deutlich kleiner sind als die Flächen des Lichtquellenträgers und der Ausnehmung des Grundkörpers.

In einer vorteilhaften Ausführungsform besteht der Grundkörper aus Stahl und der Lichtquellenträger aus Invar.

Vorzugsweise sind die Lichtquellen als LEDs ausgebildet.

Es ist weiterhin möglich, dass auf dem Grundkörper mindestens eine elektronische Ansteuer-Einheit angeordnet ist, über die eine Mehrzahl von Lichtquellen selektiv aktivierbar ist.

Dabei können mehrere Ansteuer-Einheiten über ein Bus-System untereinander verbunden sein und jeder Ansteuer-Einheit sowie jeder Lichtquelle eine definierte Bus-Adresse zugeordnet sein.

Mit Vorteil ist vorgesehen, dass der Grundkörper Aufnahme-Vertiefungen oder Aufnahme-Ausnehmungen zur Anordnung der Lichtquellen, der Ansteuer-Einheiten sowie zur Anordnung von Kabelverbindungen zwischen diesen Komponenten aufweist.

Weiterhin ist möglich, dass der Grundkörper Montageelemente zur lösbaren Befestigung auf dem Werkstücktisch einer Werkzeugmaschine aufweist.

In einer möglichen Ausführungsform ist vorgesehen , dass
- der Grundkörper rotationssymmetrisch ausgebildet ist, und
- ein Teil der Lichtquellen der ersten Gruppe gleichbeabstandet entlang einer ersten Kreislinie um die Rotations-Symmetrieachse des Grundkörpers angeordnet sind, und
- ein weiterer Teil der Lichtquellen der ersten Gruppe gleichbeabstandet entlang einer zweiten Kreislinie um die Rotations-Symmetrieachse des Grundkörpers angeordnet sind, wobei sich die Radien der ersten und zweiten Kreislinie unterscheiden, und
- der stabförmig ausgebildete Lichtquellenträger so angeordnet ist, dass dessen Längsachse die Rotations-Symmetrieachse des Grundkörpers kreuzt.

Das erfindungsgemäße Kalibrier-Artefakt kann in Verbindung mit einem winkelmessenden optischen Positionsmesssystem vorteilhaft eingesetzt werden, um damit die geometrischen Abweichungen von Maschinen zu überprüfen. Möglich ist dabei etwa der Einsatz in einer Werkzeugmaschine, bei dem das Kalibrier-Artefakt auf dem Werkstücktisch aufgespannt wird und die Empfangseinheit des optischen Positionsmesssystems in der Werkzeugaufnahme bzw. Werkzeugspindel. Alternativ kann damit aber auch ein Koordinatenmessgerät kalibriert werden. Aufgrund der erfindungsgemäßen Maßnahmen ist gewährleistet, dass thermische und/oder mechanische Einflüsse während des Kalibrationsprozesses die Messungen nicht verfälschend beeinflussen. Eine eventuelle temperaturbedingte Verlagerung zwischen den Sendeeinheiten bzw. Lichtquellen und der Empfangseinheit des Positionsmesssystems kann identifiziert und im Bedarfsfall korrigiert werden. Ferner ermöglicht das erfindungsgemäße Kalibrier-Artefakt, dass ohne aufwendige Umbauten ein großes Volumen des Arbeitsraums der Maschine allein durch geeignete Bewegungen der Linearachsen und Rundachsen der Maschine vermessen werden kann; dies erfolgt, indem darüber die Empfangseinheit und/oder das Kalibrier-Artefakt im Arbeitsraum positioniert werden.

Weitere Einzelheiten und Vorteile der vorliegenden Erfindung seien anhand der nachfolgenden Beschreibung von Ausführungsbeispielen des erfindungsgemäßen Kalibrier-Artefakts in Verbindung mit den Figuren erläutert.

### KURZE BESCHREIBUNG DER ZEICHNUNGEN

Es zeigt
- Figur 1a, 1b: jeweils eine stark schematisierte Darstellung einer Werkzeugmaschine mit dem darin angeordneten, erfindungsgemäßen Kalibrier-Artefakt und dem zur Kalibration genutzten Positionsmesssystem in einer verschiedenen Ansicht;
- Figur 2: eine vergrößerte Draufsicht auf das Kalibrier-Artefakt aus den Figuren 1a, 1b;
- Figur 3a, 3b: jeweils eine schematisierte Schnittansicht von Ausführungsbeispielen des erfindungsgemäßen Kalibrier-Artefakts;
- Figur 4: eine stark schematisierte Darstellung eines erfindungsgemäßen Kalibrier-Artefakts mit den verschalteten Lichtquellen und einer Steuereinheit.

### BESCHREIBUNG DER AUSFÜHRUNGSFORMEN

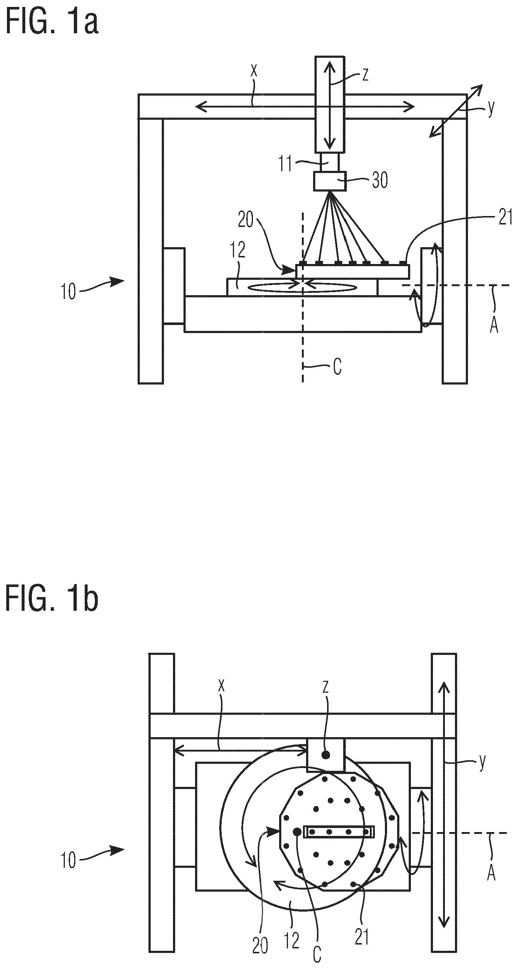

In den Figuren 1a und 1b ist in stark schematisierter Form in einer Seitenansicht sowie in einer Draufsicht eine Werkzeugmaschine 10 dargestellt, in der ein optisches Positionsmesssystem verwendet wird, um mit Hilfe des erfindungsgemäßen Kalibrier-Artefakts 20 den eingangs erläuterten Kalibrationsprozess durchzuführen.

In den Figuren ist eine 5-Achs-Werkzeugmaschine 10 gezeigt, die eine Positionierung einer Werkzeugaufnahme 11 entlang der drei Linearachsen x, y, z sowie ein Verschwenken des Werkstücktisches 12 um die beiden Rotationsachsen C, A ermöglicht.

Das optische Positionsmesssystem besteht im vorliegenden Ausführungsbeispiel aus einem räumlichen 2D-Winkelmesssystem, wie es z.B. aus der eingangs zitierten Druckschrift WO 01/38828 A1 grundsätzlich bekannt ist. Das 2D-Winkelmesssysteme umfasst hierbei einerseits eine in der Werkzeugaufnahme 11 angeordnete Empfangseinheit 30 sowie andererseits eine Mehrzahl selektiv aktivierbarer Lichtquellen 21 auf dem Kalibrier-Artefakt. Ergänzend sei an dieser Stelle noch auf die EP 3 739 287 A1 sowie die EP 3 175 949 A1 hingewiesen, die jeweils Anwendung derartiger 2D-Winkelmessysteme zeigen; aus der EP 4 145 083 A1 ist ferner ein möglicher Aufbau der Empfangseinheit bekannt. Auf den Offenbarungsgehalt dieser Druckschriften und die darin enthaltenen Informationen zu Details geeigneter 2D-Winkelmesssysteme wird hiermit ausdrücklich Bezug genommen.

Über das Positionsmesssystem wird im Kalibrationsprozess die Pose zwischen der in der Werkzeugaufnahme 11 der Werkzeugmaschine 10 angeordneten Empfangseinheit 30 und dem Kalibrier-Artefakt 20 bestimmt, das auf dem Werkstücktisch 12 der Werkzeugmaschine 10 angeordnet ist. Hierzu erfolgen inkrementale Winkelmessungen zwischen der Empfangseinheit 30 und den mehreren, selektiv aktivierbaren Lichtquellen 21 auf dem Kalibrier-Artefakt 20, wie dies in Figur 1a schematisiert angedeutet ist. In den Figuren 1a und 1b ist der Mehrzahl von Lichtquellen dabei stellvertretend das Bezugszeichen 21 zugeordnet; eine detaillierte Beschreibung der möglichen Anordnung der Lichtquellen 21 auf dem Kalibrier-Artefakt 20 erfolgt anhand der nachfolgenden Figuren. Aus den mit Hilfe des Positionsmesssystems bestimmten Winkeln zwischen der Empfangseinheit 30 und mehreren Lichtquellen 21 an unterschiedlichen Messpositionen der Werkzeugmaschine und einer groben Schätzung der Anbauparameter können die Position des Kalibrier-Artefakts 20 auf dem Werkstücktisch 12, die genauen Positionen der Lichtquellen 21 auf dem Kalibrier-Artefakt 20 und über Multiangulation die Posen zwischen der Empfangseinheit 30 und dem Kalibrier-Artefakt 20 und damit auch die Posen zwischen Werkzeugaufnahme 11 und Werkstücktisch 12 bestimmt werden.

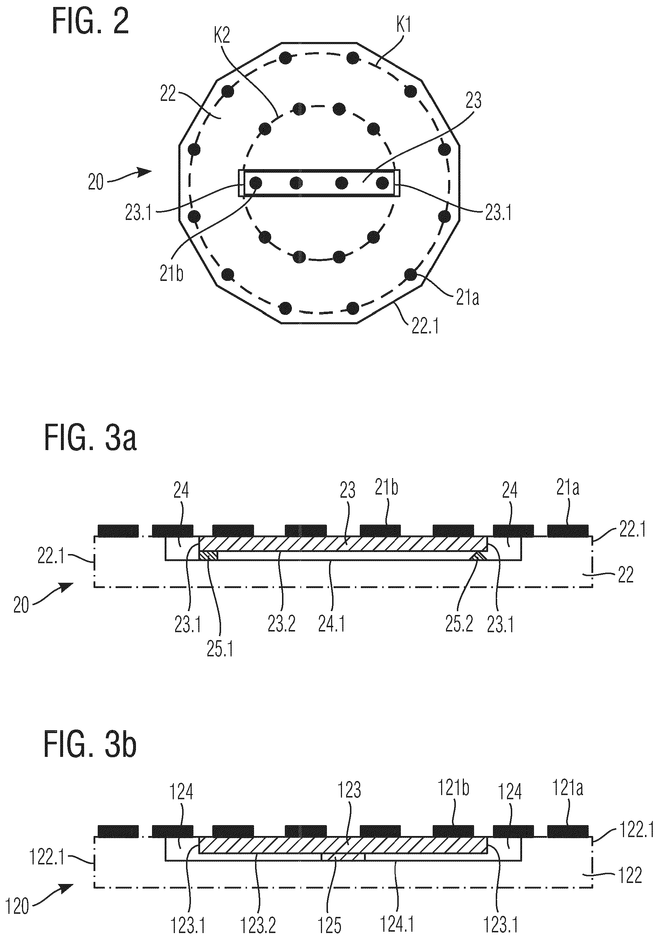

Anhand der Figuren 2 und 3a erfolgt im Anschluss die detaillierte Beschreibung eines ersten Ausführungsbeispiels des erfindungsgemäßen Kalibrier-Artefakts 20.

Das Kalibrier-Artefakt 20 umfasst einerseits einen Grundkörper 22, der im dargestellten Ausführungsbeispiel aus Stahl gefertigt und plattenförmig sowie rotationssymmetrisch um eine Rotations-Symmetrieachse S ausgebildet ist. Im konkreten Beispiel weist der Grundkörper 22 in der Draufsicht von oben die Form eines regelmäßigen Zwölfecks bzw. Dodekadons auf.

Auf dem Grundkörper 22 ist eine erste Gruppe von selektiv aktivierbaren Lichtquellen 21a angeordnet, z.B. ausgebildet als LEDs. Zur Anordnung der Lichtquellen 21a auf dem bzw. im Grundkörper 22 sind beispielsweise - nicht in den Figuren gezeigte - Montage-Gewinde, Aufnahme-Vertiefungen oder - Ausnehmungen im Grundkörper 22 vorgesehen. Die erste Lichtquellen-Gruppe umfasst hierbei mindestens eine derartige Lichtquelle 21.a, im vorliegenden Beispiel sind insgesamt 20 Lichtquellen 21a in der ersten Gruppe vorgesehen. Ein Teil der Lichtquellen 21a der ersten Gruppe ist im dargestellten Beispiel gleichmäßig verteilt entlang einer ersten Kreislinie K1 um die Rotationssymmetrieachse S angeordnet; konkret sind zwölf der 20 Lichtquellen 21a der ersten Gruppe entlang der ersten Kreislinie K1 mit festen Abständen zueinander angeordnet, wobei vorliegend eine gleichbeabstandete Anordnung der Lichtquellen vorgesehen ist. Ein weiterer Teil der Lichtquellen 21a der ersten Gruppe ist in diesem Ausführungsbeispiel gleichmäßig verteilt entlang einer zweiten Kreislinie K2 um die Rotationssymmetrieachse S angeordnet, wobei sich die Radien der ersten und zweiten Kreislinien K1, K2 wie ersichtlich unterscheiden. Vorliegend sind dabei acht der 20 Lichtquellen 21a der ersten Gruppe entlang der zweiten Kreislinie K2 gleichbeabstandet angeordnet, die einen kleineren Radius aufweist als die erste Kreislinie K1.

Nicht in den Figuren dargestellt sind Montageelemente im Grundkörper 22, über die der Grundkörper 22 und damit das Kalibrier-Artefakt 20 auf dem Werkstücktisch 12 der Werkzeugmaschine 10 lösbar befestigt werden kann. Als geeignete Montageelemente können z.B. Schraublöcher im Grundkörper 22 vorgesehen sein, die eine Befestigung des Kalibrier-Artefakts 20 auf dem Werkstücktisch 12 mit Hilfe von Nutensteinen ermöglichen.

Das erfindungsgemäße Kalibrier-Artefakt umfasst weiterhin einen auf dem Grundkörper 22 angeordneten Lichtquellenträger 23, der aus einem thermisch invarianten Material besteht. Unter einem thermisch invarianten Material sei hierbei ein Material verstanden, das in einem vorgegebenen Temperaturbereich bei Temperaturänderungen keine Längenänderungen zeigt; d.h. der thermische Ausdehnungskoeffizient des Materials ist annähernd Null. In einer bevorzugten Ausführungsform wäre z.B. Invar ein geeignetes Material für den Lichtquellenträger 23; alternativ könnte auch Zerodur oder aber ein geeignetes Carbon-Material an dieser Stelle eingesetzt werden.

Auf dem Lichtquellenträger 23 ist eine zweite Gruppe von selektiv aktivierbaren Lichtquellen 21b angeordnet, die vorzugsweise ebenfalls als LEDs ausgebildet sind. Die zweite Gruppe besteht aus mindestens zwei selektiv aktivierbaren Lichtquellen 21b, wobei im vorliegenden Beispiel vier derartige Lichtquellen 21b vorgesehen sind, die sich an genau definierten Positionen auf dem Lichtquellenträger 23 befinden. Aufgrund der Materialwahl für den Lichtquellenträger 23 ist gewährleistet, dass auch im Fall von Temperaturänderungen die Positionen der Lichtquellen 21b auf dem Lichtquellenträger 23 bzw. deren Abstände zueinander unverändert bleiben. Während im dargestellten Beispiel die erste Gruppe 20 Lichtquellen umfasst, und die zweite Gruppe vier Lichtquellen, können grundsätzlich in einer Minimalkonfiguration insgesamt lediglich drei Lichtquellen zum Einsatz kommen, von denen eine der ersten Gruppe auf dem Grundkörper zugeordnet ist und zwei der zweiten Gruppe auf dem Lichtquellenträger.

Wie aus Figur 2 als auch aus den Darstellungen in den Figuren 1a und 1b ersichtlich, sind sowohl die erste Gruppe von Lichtquellen 21a als auch der Lichtquellenträger 23 auf der gleichen Seite des plattenförmigen Grundkörpers 22 angeordnet. Im dargestellten Beispiel handelt es sich dabei um die Oberseite des Grundköpers 22, die der Empfangseinheit 30 in der Werkzeugaufnahme 11 zugewandt ist.

Der Lichtquellenträger 23 aus dem thermisch invarianten Material ist stabförmig ausgebildet; entlang der Längserstreckungsrichtung des Lichtquellenträgers 23 sind die vier Lichtquellen 21b der zweiten Gruppe mit festen Abständen zueinander angeordnet, wobei vorliegend eine gleichbeabstandete Anordnung vorgesehen ist. Die Anordnung des stabförmigen Lichtquellenträgers 23 auf dem Grundköper 22 ist derart vorgesehen, dass dessen Längsachse auf halber Länge die Rotations-Symmetrieachse S des Grundkörpers 22 schneidet. Wie ferner aus Figur 2 ersichtlich, weist der Lichtquellenträger 23 in diesem Ausführungsbeispiel etwa eine Länge auf, die dem Durchmesser der zweiten Kreislinie K2 entspricht, entlang der acht Lichtquellen 21a der ersten Gruppe angeordnet sind. Grundsätzlich wäre aber auch eine andere Anordnung und/oder Dimensionierung des Lichtquellenträgers 23 denkbar.

Sowohl der Grundkörper 22 des Kalibrier-Artefakts 20 als auch der Lichtquellenträger weisen jeweils ein oder mehrere plane Antastflächen 22.1, 23.1 auf. Auf Seiten des Grundkörpers 22 dienen die auf dem zwölfeckigen Umfang außenliegenden, planen Seitenflächen als Antastflächen, d.h. der Grundkörper 22 besitzt vorliegend zwölf nutzbare Antastflächen 22.1. Beim stabförmigen Lichtquellenträger 23 fungieren die beiden gegenüberliegenden, planen Stab-Endflächen als entsprechende Antastflächen 23.1. Im Kalibrationsprozess werden diese Antastflächen 22.1, 23.1 genutzt, um durch Antasten mit Hilfe eines in die Werkzeugaufnahme 11 eingespannten Messtasters die Position des Grundkörpers 22 auf dem Werkstücktisch bzw. die Länge des stabförmigen Lichtquellenträgers 23 zumindest grob zu bestimmen. Die derart gewonnen Positions-Informationen werden im Rahmen der Kalibration weiterverarbeitet.

Wie aus der Schnittansicht in Figur 3a ersichtlich, weist der Grundkörper 22 des erfindungsgemäßen Kalibrier-Artefakts 20 auf der Anordnungsseite des Lichtquellenträgers 23 eine Ausnehmung 24 auf, in der der Lichtquellenträger 23 angeordnet wird. Die Ausnehmung 24 ist gemäß der Draufsicht in Figur 2 wie der Lichtquellenträger 23 rechteckförmig ausgebildet und wie aus Figur 2 bzw. 3a ersichtlich etwas größer als der Lichtquellenträger 23. Eine derartige Dimensionierung der Ausnehmung 24 stellt einerseits sicher, dass sich der Lichtquellenträger 23 als auch der Grundköper 22 im Fall von Temperaturänderungen weitgehend unabhängig voneinander ausdehnen und kontrahieren können. Weiterhin ist über die Dimensionierung der Ausnehmung 24 im Grundkörper 22 gewährleistet, dass die stirnseitigen Antastflächen 23.1 des Lichtquellenträgers 23 für den Messtaster während der Kalibration zugänglich sind.

Um die erwähnte Relativdehnung bzw. -kontraktion von Grundkörper 22 und Lichtquellenträger 23 z.B. bei Temperaturänderungen zu ermöglichen, ist im dargestellten Beispiel weiterhin vorgesehen, den Lichtquellenträger 23 über ein Festlager 25.1 und ein Loslager 25.2 in der Ausnehmung 24 anzuordnen; als Loslager 25.2 kann dabei z.B. ein Gleitlager oder aber ein Festköpergelenk verwendet werden. Wie ersichtlich, sind das Festlager 25.1 sowie das Loslager 25.2 zwischen der Unterseite 23.2 des Lichtquellenträgers 23 und dem Boden 24.1 der Ausnehmung 24 angeordnet. Auf diese Art und Weise ist der längeninvariante Lichtquellenträger 23 thermisch stabil mit dem Grundköper 22 aus Stahl verbunden. Dehnt sich etwa bei einer Temperaturerhöhung der Grundkörper 22 aus, so kompensiert das Loslager 25.2 die resultierende Längenänderung im Grundkörper 22 und gewährleistet, dass dabei keine Kräfte auf den Lichtquellenträger 23 ausgeübt werden und sich dadurch ggf. die Abstände zwischen den Lichtquellen 21b der zweiten Gruppe auf dem Lichtquellenträger undefiniert ändern.

Eine alternative Möglichzeit zur Anordnung des Lichtquellenträgers 123 in einer geeignet dimensionierten Ausnehmung 124 des Grundkörpers 122 ist in Figur 3b in einer Schnittansicht analog zu Figur 3a gezeigt. Nachfolgend wird lediglich auf die maßgeblichen Unterschiede dieser Variante gegenüber dem Beispiel in Figur 3a eingegangen.

So sind nunmehr keine zwei Lager zur Anordnung des Lichtquellenträgers 123 auf dem Boden der Ausnehmung 124 im Grundkörper 122 vorgesehen, sondern ein stegförmiges Verbindungselement 125, das in der Ausnehmung 124 zwischen dem Boden 124.1 der Ausnehmung 124 und der Unterseite 123.2 des Lichtquellenträgers 123 angeordnet ist. Die Kontaktflächen zwischen dem Verbindungselement 125 und dem Lichtquellenträger 123 und der Ausnehmung 124 im Grundkörper 122 sind dabei jeweils deutlich kleiner als die Flächen des Lichtquellenträgers 123 und der Ausnehmung 124 des Grundkörpers 122. Über das Verbindungselement 125 werden somit bei eventuellen Temperaturänderungen lediglich vernachlässigbar kleine Spannungen auf die Kontaktflächen und damit auf den Lichtquellenträger 123 eingebracht. Der Grundkörper 122 kann sich daher auch bei Temperaturänderungen in der Ausnehmung 124 i.w. frei ausdehnen oder kontrahieren.

In einer weiteren - nicht in den Figuren dargestellten - Variante wäre es auch möglich, den Lichtquellenträger über ein mittiges Festlager und zwei Loslager in den äußeren Bereichen auf dem Boden der Ausnehmung im Grundkörper anzuordnen.

Wie bereits oben erwähnt, sind die Lichtquellen auf dem Grundkörper als auch die Lichtquellen auf dem Lichtquellenträger selektiv aktivierbar. Dies bedeutet, dass die Lichtquellen je nach Bedarf gezielt ein- und ausgeschaltet werden können, so dass für die Kalibration immer nur bestimmte Lichtquellen für die Winkelmessungen mit Hilfe der Empfangseinheit genutzt werden.

Typischerweise werden dabei diejenigen Lichtquellen aktiviert bzw. genutzt, die sich gerade im Sichtbereich der Empfangseinheit befinden, d.h. diejenigen Lichtquellen, deren Sichtverbindung zur Empfangseinheit nicht unterbrochen ist.

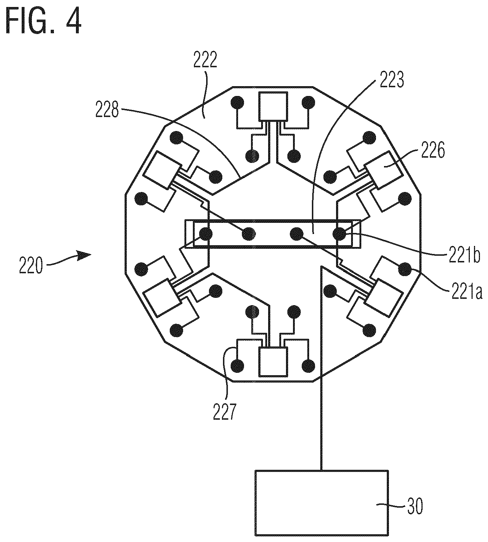

Zur selektiven Aktivierung der verschiedenen Lichtquellen des erfindungsgemäßen Kalibrier-Artefakts ist auf dem Grundkörper mindestens eine elektronische Ansteuer-Einheit vorgesehen, über die eine bestimmte Anzahl von Lichtquellen ein- und ausschaltbar ist. In Figur 4 ist für ein konkretes Ausführungsbeispiel eines erfindungsgemäßen Kalibrier-Artefakts 220 dargestellt, wie insgesamt sechs derartige Ansteuereinheiten 226 auf dem Grundkörper 222 in geeigneten Aufnahme-Vertiefungen oder - Ausnehmungen angeordnet sind. Über jede der sechs Ansteuer-Einheiten 226 sind vorliegend vier Lichtquellen 221a, 221b ansteuerbar, die mit der zugeordneten Ansteuer-Einheit jeweils über eine geeignete Kabelverbindung 227 verbunden ist. Die sechs Ansteuereinheiten 226 sind weiterhin über ein Bus-System 228 untereinander verbunden, beispielsweise in einer sog. Daisy-Chain-Anordnung. Die Kabelverbindungen 227 als auch das Bus-System 228 sind auf dem Grundkörper 222 wie die Ansteuer-Einheiten 226 und die Lichtquellen 221a, 221b in geeignet ausgebildeten Aufnahme-Vertiefungen bzw. -ausnehmungen angeordnet.

Weiterhin mit dem Bus-System 228 verbunden ist eine zentrale Steuereinheit 30, die die Positionsbestimmung und die erforderlichen Berechnungen etc. im Rahmen des Kalibrationsprozesses übernimmt und die Ansteuerung der zu aktivierenden Lichtquellen 221a, 221b synchronisiert. Jeder Ansteuer-Einheit 226 als auch jeder Lichtquelle 221a, 221b ist hierbei eine definierte Bus-Adresse zugeordnet, über die die zentrale Steuereinheit 30 das Aktivieren von geeigneten Lichtquellen 221a, 221b im Kalibrationsprozess vornimmt.

Neben den erläuterten Ausführungsbeispielen erfindungsgemäßer Kalibrier-Artefakte gibt es im Rahmen der vorliegenden Erfindung selbstverständlich noch weitere Ausgestaltungsmöglichkeiten.

So ist es natürlich möglich, die Größe des Grundkörpers als auch des Lichtquellenträgers je nach zu kalibrierender Maschine geeignet anzupassen; damit einher geht natürlich auch eine Anpassung der Anzahl von Lichtquellen.

Weiterhin kann auch die Form des Grundköpers geeignet angepasst werden, d.h. dieser ist nicht zwingend plattenförmig und/oder rotationssymmetrisch ausgebildet. Um den Emissionsbereich der Lichtquellen besser nutzen zu können, könnte der Grundkörper grundsätzlich auch wannen-, turm-, oder pyramidenförmig ausgebildet werden.

Grundsätzlich könnte auch eine andere Anordnung des Kalibrier-Artefakts in einer Werkzeugmaschine vorgesehen sein. Hierbei wäre dann das Kalibrier-Artefakt in der Werkzeugaufnahme angeordnet und ein oder mehrere Empfangseinheiten auf dem Werkstücktisch. In diesem Fall könnte der Grundkörper dann wie bereits vorstehend erwähnt turmförmig ausgebildet und Lichtquellen der ersten Gruppe an den Außenseiten angeordnet sein; der Lichtquellenträger wäre dann in einer Ausnehmung in der Außenwand angeordnet etc..

## Patentansprüche

1. Kalibrier-Artefakt (20; 120; 220) zur Überprüfung der geometrischen Abweichungen einer Maschine mittels eines optischen Positionsmesssystems, mit
- einem Grundkörper (22; 122; 222), auf dem eine erste Gruppe mit mindestens einer selektiv aktivierbaren Lichtquelle (21a; 121a; 221a) angeordnet ist, sowie
- einem auf dem Grundkörper (22; 122; 222) angeordneten Lichtquellenträger (23; 123; 223), auf dem eine zweite Gruppe mit mindestens zwei selektiv aktivierbaren Lichtquellen (21b; 121b; 221b) angeordnet ist, wobei der Lichtquellenträger (23; 123; 223) aus einem thermisch invarianten Material besteht.

2. Kalibrier-Artefakt (20; 120; 220) nach Anspruch 1, wobei die erste Gruppe von Lichtquellen (21a; 121a; 221a) und der Lichtquellenträger (23; 123; 223) auf der gleichen Seite des Grundkörpers (22; 122; 222) angeordnet sind.

3. Kalibrier-Artefakt (20; 120; 220) nach Anspruch 1 oder 2, wobei der Lichtquellenträger (23; 123; 223) stabförmig ausgebildet ist und die Lichtquellen (21b; 121b; 221b) darauf mit festen Abständen entlang der Längserstreckungsrichtung des Lichtquellenträgers (23; 123; 223) angeordnet sind.

4. Kalibrier-Artefakt (20; 120; 220) nach mindestens einem der vorhergehenden Ansprüche, wobei der Grundkörper (22; 122; 222) als auch der Lichtquellenträger (23; 123; 223) jeweils ein oder mehrere plane Antastflächen (22.1, 23.1; 122.1, 123.1) aufweisen.

5. Kalibrier-Artefakt (20; 120; 220) nach mindestens einem der vorhergehenden Ansprüche, wobei der Lichtquellenträger (23; 123; 223) derart in einer Ausnehmung (24; 124) des Grundkörpers (22; 122; 222) angeordnet ist, dass sich der Lichtquellenträger (23; 123; 223) als auch der Grundkörper (22; 122; 222) bei Temperaturänderungen weitgehend unabhängig voneinander ausdehnen oder kontrahieren können.

6. Kalibrier-Artefakt (20; 120; 220) nach Anspruch 4 und 5, wobei die Ausnehmung (24; 124) im Grundkörper (22; 122; 222) derart dimensioniert ist, dass die Antastflächen (23.1, 123.1) des Lichtquellenträgers (23; 123; 223) zugänglich sind.

7. Kalibrier-Artefakt (20)nach Anspruch 5, wobei der Lichtquellenträger (23) über ein Festlager (25.1) und mindestens ein Loslager (25.2) in der Ausnehmung (24) des Grundkörpers (22) angeordnet ist.

8. Kalibrier-Artefakt (120)nach Anspruch 4, wobei
- der Lichtquellenträger (123) über ein stegförmiges Verbindungselement (125) in der Ausnehmung (124) des Grundkörpers (122) angeordnet ist, und
- wobei die Kontaktflächen zwischen dem Verbindungselement (125) und dem Lichtquellenträger (123) und der Ausnehmung (124) im Grundkörper (122) deutlich kleiner sind als die Flächen des Lichtquellenträgers (123) und der Ausnehmung (124) des Grundkörpers (122).

9. Kalibrier-Artefakt (20; 120; 220) nach mindestens einem der vorhergehenden Ansprüche, wobei der Grundkörper (22; 122; 222) aus Stahl und der Lichtquellenträger (23; 123; 223) aus Invar besteht.

10. Kalibrier-Artefakt (20; 120; 220) nach mindestens einem der vorhergehenden Ansprüche, wobei die Lichtquellen (21; 21a, 21b; 121a, 121b; 221a, 221b) als LEDs ausgebildet sind.

11. Kalibrier-Artefakt (20; 120; 220) nach mindestens einem der vorhergehenden Ansprüche, wobei auf dem Grundkörper (22; 122; 222) ferner mindestens eine elektronische Ansteuer-Einheit angeordnet ist, über die eine Mehrzahl von Lichtquellen (21; 21a, 21b; 121a, 121b; 221a, 221b) selektiv aktivierbar ist.

12. Kalibrier-Artefakt (20; 120; 220) nach Anspruch 11, wobei auf dem Grundkörper (22; 122; 222) mehrere Ansteuer-Einheiten (226) über ein Bus-System untereinander verbunden sind und jeder Ansteuer-Einheit (226) sowie jeder Lichtquelle (21; 21a, 21b; 121a, 121b; 221a, 221b) eine definierte Bus-Adresse zugeordnet ist.

13. Kalibrier-Artefakt (20; 120; 220) nach Anspruch 11, wobei der Grundkörper (22; 122; 222) Aufnahme-Vertiefungen oder Aufnahme-Ausnehmungen zur Anordnung der Lichtquellen (21; 21a, 21b; 121a, 121b; 221a, 221b), der Ansteuer-Einheiten sowie zur Anordnung von Kabelverbindungen zwischen diesen Komponenten aufweist.

14. Kalibrier-Artefakt (20; 120; 220) nach mindestens einem der vorhergehenden Ansprüche, wobei der Grundkörper (22; 122; 222) Montageelemente zur lösbaren Befestigung auf dem Werkstücktisch (12) einer Werkzeugmaschine aufweist.

15. Kalibrier-Artefakt (20; 120; 220) nach mindestens einem der vorhergehenden Ansprüche, wobei
- der Grundkörper (22; 122; 222) rotationssymmetrisch ausgebildet ist, und
- ein Teil der Lichtquellen (21a; 121a; 221a) der ersten Gruppe gleichbeabstandet entlang einer ersten Kreislinie (K1) um die Rotations-Symmetrieachse des Grundkörpers (22; 122; 222) angeordnet sind, und
- ein weiterer Teil der Lichtquellen (21a; 121a; 221a) der ersten Gruppe gleichbeabstandet entlang einer zweiten Kreislinie (K2) um die Rotations-Symmetrieachse des Grundkörpers (22; 122; 222) angeordnet sind, wobei sich die Radien der ersten und zweiten Kreislinie (K1, K2) unterscheiden, und
- der stabförmig ausgebildete Lichtquellenträger (23; 123; 223) so angeordnet ist, dass dessen Längsachse die Rotations-Symmetrieachse des Grundkörpers (22; 122; 222) kreuzt.

## Claims

1. Calibration artifact (20; 120; 220) for checking the geometric deviations of a machine using an optical position measuring system, comprising
- a main body (22; 122; 222) on which a first group comprising at least one selectively activatable light source (21a; 121a; 221a) is arranged, and
- a light source carrier (23; 123; 223) which is arranged on the main body (22; 122; 222) and on which a second group comprising at least two selectively activatable light sources (21b; 121b; 221b) is arranged, wherein the light source carrier (23; 123; 223) consists of a thermally invariant material.

2. Calibration artifact (20; 120; 220) according to Claim 1, wherein the first group of light sources (21a; 121a; 221a) and the light source carrier (23; 123; 223) are arranged on the same side of the main body (22; 122; 222).

3. Calibration artifact (20; 120; 220) according to Claim 1 or 2, wherein the light source carrier (23; 123; 223) is of rod-like design and the light sources (21b; 121b; 221b) are arranged on it at fixed distances along the direction of longitudinal extent of the light source carrier (23; 123; 223).

4. Calibration artifact (20; 120; 220) according to at least one of the preceding claims, wherein the main body (22; 122; 222) and the light source carrier (23; 123; 223) each have one or more planar probing surfaces (22.1, 23.1; 122.1, 123.1).

5. Calibration artifact (20; 120; 220) according to at least one of the preceding claims, wherein the light source carrier (23; 123; 223) is arranged in a recess (24; 124) of the main body (22; 122; 222) in such a way that the light source carrier (23; 123; 223) and the main body (22; 122; 222) can expand or contract largely independently of each other in the event of changes in temperature.

6. Calibration artifact (20; 120; 220) according to Claims 4 and 5, wherein the recess (24; 124) in the main body (22; 122; 222) is dimensioned in such a way that the probing surfaces (23.1, 123.1) of the light source carrier (23; 123; 223) are accessible.

7. Calibration artifact (20) according to Claim 5, wherein the light source carrier (23) is arranged in the recess (24) of the main body (22) via a fixed bearing (25.1) and at least one floating bearing (25.2).

8. Calibration artifact (120) according to Claim 4, wherein
- the light source carrier (123) is arranged in the recess (124) of the main body (122) via a web-like connecting element (125), and
- wherein the contact surfaces between the connecting element (125) and the light source carrier (123) and the recess (124) in the main body (122) are considerably smaller than the surfaces of the light source carrier (123) and the recess (124) of the main body (122).

9. Calibration artifact (20; 120; 220) according to at least one of the preceding claims, wherein the main body (22; 122; 222) consists of steel and the light source carrier (23; 123; 223) consists of Invar.

10. Calibration artifact (20; 120; 220) according to at least one of the preceding claims, wherein the light sources (21; 21a, 21b; 121a, 121b; 221a, 221b) are designed as LEDs.

11. Calibration artifact (20; 120; 220) according to at least one of the preceding claims, wherein at least one electronic actuation unit is further arranged on the main body (22; 122; 222), a plurality of light sources (21; 21a, 21b; 121a, 121b; 221a, 221b) being selectively activatable via the electronic actuation unit.

12. Calibration artifact (20; 120; 220) according to Claim 11, wherein a plurality of actuation units (226) are connected to each other via a bus system on the main body (22; 122; 222) and a defined bus address is assigned to each actuation unit (226) and to each light source (21; 21a, 21b; 121a, 121b; 221a, 221b).

13. Calibration artifact (20; 120; 220) according to Claim 11, wherein the main body (22; 122; 222) has receiving cavities or receiving recesses for arrangement of the light sources (21; 21a, 21b; 121a, 121b; 221a, 221b), the actuation units and for arrangement of cable connections between these components.

14. Calibration artifact (20; 120; 220) according to at least one of the preceding claims, wherein the main body (22; 122; 222) has mounting elements for releasable fixing on the workpiece table (12) of a machine tool.

15. Calibration artifact (20; 120; 220) according to at least one of the preceding claims, wherein
- the main body (22; 122; 222) is of rotationally symmetrical design, and
- a portion of the light sources (21a; 121a; 221a) of the first group are arranged at equal distances along a first circular line (K1) around the axis of rotational symmetry of the main body (22; 122; 222), and
- a further portion of the light sources (21a; 121a; 221a) of the first group are arranged at equal distances along a second circular line (K2) around the axis of rotational symmetry of the main body (22; 122; 222), wherein the radii of the first and second circular lines (K1, K2) are different, and
- the light source carrier (23; 123; 223) of rod-like design is arranged such that its longitudinal axis crosses the axis of rotational symmetry of the main body (22; 122; 222).

## Revendications

1. Artéfact d'étalonnage (20 ; 120 ; 220) pour vérifier les écarts géométriques d'une machine au moyen d'un système optique de mesure de position, comprenant
- un corps de base (22 ; 122 ; 222) sur lequel est disposé un premier groupe comprenant au moins une source lumineuse (21a ; 121a ; 221a) activable sélectivement, ainsi que
- un support de source lumineuse (23 ; 123 ; 223) disposé sur le corps de base (22 ; 122 ; 222) sur lequel est disposé un deuxième groupe comprenant au moins deux sources lumineuses (21b ; 121b ; 221b) activables sélectivement, le support de source lumineuse (23 ; 123 ; 223) étant constitué d'un matériau thermiquement invariant.

2. Artéfact d'étalonnage (20 ; 120 ; 220) selon la revendication 1, dans lequel le premier groupe de sources lumineuses (21a ; 121a ; 221a) et le support de source lumineuse (23 ; 123 ; 223) sont disposés sur le même côté du corps de base (22 ; 122 ; 222).

3. Artéfact d'étalonnage (20 ; 120 ; 220) selon la revendication 1 ou 2, dans lequel le support de source lumineuse (23 ; 123 ; 223) est réalisé sous forme de barre et les sources lumineuses (21b ; 121b ; 221b) sont disposées sur celui-ci à des distances fixes le long de la direction d'extension longitudinale du support de source lumineuse (23 ; 123 ; 223).

4. Artéfact d'étalonnage (20 ; 120 ; 220) selon l'une quelconque des revendications précédentes, dans lequel le corps de base (22 ; 122 ; 222) ainsi que le support de source lumineuse (23 ; 123 ; 223) présentent respectivement une ou plusieurs surfaces de palpage planes (22.1, 23.1 ; 122.1, 123.1).

5. Artéfact d'étalonnage (20 ; 120 ; 220) selon l'une quelconque des revendications précédentes, dans lequel le support de source lumineuse (23 ; 123 ; 223) est disposé dans un évidement (24 ; 124) du corps de base (22 ; 122 ; 222) de telle sorte que le support de source lumineuse (23 ; 123 ; 223) ainsi que le corps de base (22 ; 122 ; 222) puissent se dilater ou se contracter de manière notablement indépendante l'un de l'autre lors de variations de température.

6. Artéfact d'étalonnage (20 ; 120 ; 220) selon les revendications 4 et 5, dans lequel l'évidement (24 ; 124) ménagé dans le corps de base (22 ; 122 ; 222) est dimensionné de telle sorte que les surfaces de palpage (23.1, 123.1) du support de source lumineuse (23 ; 123 ; 223) soient accessibles.

7. Artéfact d'étalonnage (20) selon la revendication 5, dans lequel le support de source lumineuse (23) est disposé dans l'évidement (24) du corps de base (22) au moyen d'un palier fixe (25.1) et d'au moins un palier libre (25.2).

8. Artéfact d'étalonnage (120) selon la revendication 4, dans lequel
- le support de source lumineuse (123) est disposé dans l'évidement (124) du corps de base (122) au moyen d'un élément de liaison en forme de nervure (125), et
- les surfaces de contact entre l'élément de liaison (125) et le support de source lumineuse (123) et l'évidement (124) dans le corps de base (122) sont notablement plus petites que les surfaces du support de source lumineuse (123) et de l'évidement (124) du corps de base (122).

9. Artéfact d'étalonnage (20 ; 120 ; 220) selon l'une quelconque des revendications précédentes, dans lequel le corps de base (22 ; 122 ; 222) est constitué d'acier et le support de source lumineuse (23 ; 123 ; 223) est constitué d'Invar.

10. Artéfact d'étalonnage (20 ; 120 ; 220) selon l'une quelconque des revendications précédentes, dans lequel les sources lumineuses (21 ; 21a, 21b ; 121a, 121b ; 221a, 221b) sont réalisées sous forme de LED.

11. Artéfact d'étalonnage (20 ; 120 ; 220) selon l'une quelconque des revendications précédentes, dans lequel au moins une unité de commande électronique est en outre disposée sur le corps de base (22 ; 122 ; 222), par l'intermédiaire de laquelle une pluralité de sources lumineuses (21 ; 21a, 21b ; 121a, 121b ; 221a, 221b) peut être activée sélectivement.

12. Artéfact d'étalonnage (20 ; 120 ; 220) selon la revendication 11, dans lequel plusieurs unités de commande (226) sont reliées entre elles sur le corps de base (22 ; 122 ; 222) par l'intermédiaire d'un système de bus et une adresse de bus définie est attribuée à chaque unité de commande (226) ainsi qu'à chaque source lumineuse (21 ; 21a, 21b ; 121a, 121b ; 221a, 221b).

13. Artéfact d'étalonnage (20 ; 120 ; 220) selon la revendication 11, dans lequel le corps de base (22 ; 122 ; 222) présente des creux de réception ou des évidements de réception pour l'agencement des sources lumineuses (21 ; 21a, 21b ; 121a, 121b ; 221a, 221b), des unités de commande ainsi que pour l'agencement des connexions par câble entre ces composants.

14. Artéfact d'étalonnage (20 ; 120 ; 220) selon l'une quelconque des revendications précédentes, dans lequel le corps de base (22 ; 122 ; 222) présente des éléments de montage pour une fixation amovible sur la table porte-pièce (12) d'une machine-outil.

15. Artéfact d'étalonnage (20 ; 120 ; 220) selon l'une quelconque des revendications précédentes, dans lequel
- le corps de base (22 ; 122 ; 222) est réalisé de manière symétrique de rotation, et
- une partie des sources lumineuses (21a ; 121a ; 221a) du premier groupe est disposée de manière équidistante le long d'une première ligne circulaire (K1) autour de l'axe de symétrie de rotation du corps de base (22 ; 122 ; 222), et
- une autre partie des sources lumineuses (21a ; 121a ; 221a) du premier groupe est disposée de manière équidistante le long d'une seconde ligne circulaire (K2) autour de l'axe de symétrie de rotation du corps de base (22 ; 122 ; 222), les rayons des première et seconde lignes circulaires (K1, K2) étant différents, et
- le support de source lumineuse (23 ; 123 ; 223) réalisé sous forme de barre est disposé de telle sorte que son axe longitudinal croise l'axe de symétrie de rotation du corps de base (22 ; 122 ; 222).
